# EUROPEAN PATENT APPLICATION

(11) **EP 4 216 533 A1**
(43) Date of publication of application: **26.07.2023**
(21) Application number: 21869572.4
(22) Date of filing: 24.08.2021
(51) Int. Cl.: H04N 5/225, G03B 17/17, G03B 17/12

(54) **CAMERA DEVICE AND OPTICAL INSTRUMENT**

(30) Priority: 16.09.2020 KR 20200118965
(71) Applicant: LG Innotek Co., Ltd., Seoul 07796 (KR)
(72) Inventor: PARK, Sang Ok, Seoul 07796 (KR)
(74) Representative: Plasseraud IP
(86) International application number: PCT/KR2021/011309
(87) International publication number: WO 2022/059949

(57) **Abstract**

The present embodiment relates to a camera device, comprising: a housing; a mover disposed within the housing; a first magnet and coil tiling the mover relative to a first axis; a second magnet and coil tiling the mover relative to a second axis, which is perpendicular to the first axis; and a lens module moving along a third axis, which is perpendicular to the first and second axes, wherein the light enters along the first axis, and a first yoke is disposed between the second magnet and the mover.

## Description

### [Technical Field]

The present embodiment relates to a camera device and an optical instrument.

### [Background Art]

A camera device is a device that takes a picture or video of a subject and is installed in an optical instrument such as a smartphone, a drone, or a vehicle. To improve video quality, the camera device may have: optical image stabilization (OIS) function that compensates for image shake caused by user movement; auto focus (AF) function that automatically adjusts the distance between the image sensor and the lens to align the focal length of the lens; and zoom function that increases or decreases the magnification of a distant subject through a zoom lens.

Meanwhile, in recent years, due to the strengthening of mobile phone functions, the number of pixels has been increased, the zoom function has been strengthened, and the adoption of multi-camera devices in mobile phones is increasing.

However, due to the increase in the electromagnetic force of the zoom camera device, when the zoom camera device is applied to a multi-camera device, a technology for electromagnetic shielding design between the zoom camera device and other camera devices is required.

### [Detailed Description of the Invention]

### [Technical Subject]

The present embodiment is intended to provide a camera device for shielding an electromagnetic field that affects another camera device adjacent to the zoom camera device and comprising a structure for increasing the electromagnetic force.

### [Technical Solution]

A camera device according to the present embodiment comprises: a housing; a mover being disposed inside the housing; a first magnet and coil for tilting the mover with respect to a first axis; a second magnet and a second coil for tilting the mover with respect to a second axis, which is perpendicular to the first axis; and a lens module being moved along a third axis perpendicular to the first and second axes, wherein a light enters along the first axis, and wherein a first yoke may be disposed between the second magnet and the mover.

A camera device according to the present embodiment comprises: a housing; a mover being disposed inside the housing; a lens module being spaced apart from the mover and comprising a lens; and a first yoke being disposed between the mover and the housing, wherein the mover is tilted with respect to a first axis and tilted with respect to a second axis perpendicular to the first axis, wherein the lens module is moved along a third axis perpendicular to the first axis and the second axis, wherein a light is incident along the first axis, and wherein the first yoke may be disposed to be overlapped with the first shaft.

A camera device according to the present embodiment comprises: a first housing; a first unit comprising a first mover being disposed inside the first housing and a yoke being disposed between the first mover and the first housing; and a second unit comprising a second housing and a second mover being disposed inside the second housing, wherein the first unit performs an image stabilization function, wherein the second unit performs a focusing function, wherein the first mover comprises a first surface and a second surface being disposed in a direction perpendicular to the first surface, and wherein the yoke of the first unit may comprise a first yoke being disposed between the first surface of the first mover and the first housing and a second yoke being disposed between the second surface of the first mover and the first housing.

The first yoke and the second yoke may be disposed parallel to a direction in which the second mover moves.

The camera device comprises: a first magnet and a first coil for tilting the first mover with respect to a first axis; and a second magnet and a second coil for tilting the first mover with respect to a second axis perpendicular to the first axis, wherein a light is incident along the first axis, and wherein the first mover, the first yoke, the second magnet, and the second coil may be sequentially disposed along the first axis.

The first yoke may have an upper surface or a lower surface perpendicular to the first axis.

The camera device may comprise a driving plate being disposed between the first housing and the first mover.

The second mover may move along a third axis perpendicular to the first axis and the second axis, and the driving plate may be disposed between the first housing and the first mover in a third axis direction.

At least a portion of the first yoke may be overlapped with the first magnet in the third axis direction.

The length of the first yoke in the second axis direction may be 1.2 to 1.6 times the length of the second magnet.

The length of the first yoke in the second axis direction may be 1.3 to 1.5 times the length of the second magnet.

In the camera device, the first mover may comprise a reflective member.

The light may be incident to the reflective member along the first axis.

The reflective member may reflect the light to a lens module being coupled to the second mover.

The second yoke may be disposed between the first magnet and the first mover.

In the second axis direction, the first yoke may be longer than the length of the second magnet.

The area of the first yoke may be greater than the area of the second magnet.

The length of the long axis of the first yoke may be greater than the length of the long axis of the second magnet.

The area of one surface of the first yoke may be greater than the area of one surface of the second magnet facing the one surface of the first yoke.

The second yoke may comprise two second yokes being disposed at an opposite side to each other with respect to the first mover, and the first yoke and the two second yokes may form a '⊂' shape.

The first magnet comprises two first magnets, the second yoke comprises two second yokes being disposed between the two first magnets and the first mover, and the first yoke may connect the two second yokes.

The first yoke may be overlapped with the first mover and the second magnet in the first axis direction.

The first mover comprises both side surfaces and an inclined surface between the both side surfaces, wherein the first magnet is disposed on both side surfaces of the first mover, and wherein the reflective member may be disposed on the inclined surface of the first mover.

The first magnet comprises: a first side magnet being disposed on one side surface of both side surfaces of the first mover; and a second side magnet being disposed on the other side surface of the both side surfaces of the first mover, wherein in the second axis direction, the length of the first yoke may be equal to the distance between the first side magnet and the second side magnet.

In the second axis direction, the distance between the first magnet and the second magnet may be less than 1/4 of the length of the second magnet in a corresponding direction.

The first mover comprises a first groove being formed on the first surface, and the first yoke and the second magnet may be disposed inside the first groove.

The first mover comprises a second groove being formed on the second surface of the first mover, the first magnet is disposed in the second groove of the first mover, and at least a portion of the first magnet may be open toward the first groove of the first mover.

The first mover comprises a third groove being formed in the first groove of the first mover, wherein an adhesive for fixing the first yoke to the first mover may be disposed in the third groove of the first mover.

The first magnet may comprise a magnet formed to be a single one by bonding 2-pole magnetized magnets with an adhesive.

The camera device comprises: a third magnet being disposed on the first mover; and a fourth magnet being disposed in the first housing to exert an attractive force with the third magnet, and the driving plate may be disposed between the third magnet and the fourth magnet.

The driving plate comprises: a base; a first protruded portion in the shape of a hemisphere being protruded from a first surface of the base; and a second protruded portion in the shape of a hemisphere being protruded from a second surface at an opposite side of the first surface of the base, wherein the first housing comprises a groove in which at least a portion of the first protruded portion is disposed, and wherein the first mover may comprise a groove in which at least a portion of the second protruded portion is disposed.

The first protruded portion comprises two first protruded portions; the two first protruded portions are spaced apart in a first direction; the second protruded portion comprises two second protruded portions; the two second protruded portions are spaced apart in a second direction perpendicular to the first direction; and the first protruded portion and the second protruded portion may be integrally formed with the base.

An actuator for moving the second mover in the third axis direction may be comprised.

The optical instrument according to the present embodiment comprises: the camera device; and an additional camera device being spaced apart from the camera device, wherein the additional camera device comprises a lens driving device being disposed adjacent to the housing and a lens being coupled to the lens driving device and facing the first axis direction, and wherein the lens driving device may comprise a magnet and a first coil for moving the lens in the first axis direction.

The lens driving device may comprise a second coil being disposed at a position corresponding to the magnet to move the lens in a direction perpendicular to the first axis.

An optical instrument according to the present embodiment may comprise: a main body; the camera device being disposed in the main body; and a display being disposed in the main body and outputting an image photographed by the camera device.

### [Advantageous Effects]

Through the present embodiment, leakage flux generated from a zoom camera device can be minimized.

Through this, the distance between the zoom camera device and other camera devices can be minimized, so that the design freedom can be increased when the camera device is disposed inside the smartphone. Through this, the arrangement of other parts of the smartphone, such as increasing the battery of the smartphone, can be facilitated.

### [Brief Description of Drawings]

FIG. 1 is a perspective view illustrating a camera device according to a present embodiment.
FIG. 2 is a cross-sectional view viewed from A-A in FIG. 1.
FIG. 3 is a cross-sectional view viewed from line B-B of FIG. 1.
FIG. 4 is an exploded perspective view of a first camera device according to present embodiment.
FIG. 5 is an exploded perspective view of a first camera device viewed from a direction different from that of FIG. 4.
FIG. 6 is a plan view of a state in which a cover member is omitted in a first camera device according to present embodiment.
FIG. 7 is a perspective view of a state in which a mover and a rotation plate are omitted in the first camera device of FIG. 6.
FIGS. 8 and 9 are diagrams illustrating an assembly relationship between a mover, a rotation plate, and related configurations of a first camera device according to a present embodiment.
FIG. 10 is a cross-sectional view of a mover and related configurations of a first camera device according to a present embodiment cut in a vertical direction and viewed from the front.
FIG. 11 is a cross-sectional view of a mover and related configurations of a first camera device according to a present embodiment cut in a horizontal direction and viewed from below.
FIG. 12 is a diagram of a state in which a second magnet and a first yoke are omitted in the first camera device of FIG. 11.
FIGS. 13a to 13c are cross-sectional views illustrating a state in which a mover of a first camera device according to the present embodiment is tilted about a y-axis.
FIGS. 14a to 14c are cross-sectional views illustrating a state in which a mover of a first camera device according to a present embodiment is tilted about an x-axis.
FIG. 15 is an exploded perspective view of a lens actuator provided for auto focus (AF) and zoom in a first camera device according to the present embodiment.
FIG. 16 is a plan view of a state in which a cover member is omitted in a second camera device according to a present embodiment.
FIG. 17 is an exploded perspective view of a second camera device according to present embodiment.
FIG. 18 is an exploded perspective view of a second camera device viewed from a direction different from that of FIG. 4.
FIG. 19 is a plan view of a camera device according to a present embodiment.
FIG. 20 is a cross-sectional view viewed from A-A of FIG. 19.
FIG. 21 is a cross-sectional view viewed from line B-B of FIG. 19.
FIG. 22 is a perspective view of an optical instrument according to a present embodiment.

### [BEST MODE]

Hereinafter, preferred embodiments of the present invention will be described in detail with reference to the accompanying drawings.

However, the technical idea of the present invention is not limited to some embodiments to be described, but may be implemented in various forms, and inside the scope of the technical idea of the present invention, one or more of the constituent elements may be selectively combined or substituted between embodiments.

In addition, the terms (comprising technical and scientific terms) used in the embodiments of the present invention, unless explicitly defined and described, can be interpreted as a meaning that can be generally understood by a person skilled in the art, and commonly used terms such as terms defined in the dictionary may be interpreted in consideration of the meaning of the context of the related technology.

In addition, terms used in the present specification are for describing embodiments and are not intended to limit the present invention.

In the present specification, the singular form may comprise the plural form unless specifically stated in the phrase, and when described as "at least one (or more than one) of A and B and C", it may comprise one or more of all combinations that can be combined with A, B, and C.

In addition, in describing the components of the embodiment of the present invention, terms such as first, second, A, B, (a), and (b) may be used. These terms are merely intended to distinguish the components from other components, and the terms do not limit the nature, order or sequence of the components.

And, when a component is described as being 'connected', 'coupled' or 'interconnected' to another component, the component is not only directly connected, coupled or interconnected to the other component, but may also comprise cases of being 'connected', 'coupled', or 'interconnected' due that another component between that other components.

In addition, when described as being formed or arranged in "on (above)" or "below (under)" of each component, "on (above)" or "below (under)" means that it comprises not only the case where the two components are directly in contact with, but also the case where one or more other components are formed or arranged between the two components. In addition, when expressed as "on (above)" or "below (under)", the meaning of not only an upward direction but also a downward direction based on one component may be comprised.

An 'optical axis direction' used hereinafter is defined as an optical axis direction of a lens coupled to a lens driving device. Therefore, the 'optical axis direction' may coincide with the light axis direction of the image sensor of the camera device.

The 'auto focus (AF) function' used hereinafter is defined as a function that automatically focuses on a subject by adjusting the distance to the image sensor by moving the lens in an optical axis direction according to the distance of the subject so that a clear image of the subject can be obtained on the image sensor. Meanwhile, 'auto focus' may be used interchangeably with 'auto focus (AF)'.

The 'handshake correction function' used hereinafter is defined as a function of moving or tilting a lens in a direction perpendicular to an optical axis direction to offset vibration (movement) generated in an image sensor by an external force. Meanwhile, 'handshake correction' may be used interchangeably with 'OIS' or 'optical image stabilization' .

The 'zoom function' used hereinafter is defined as a function that arbitrarily adjusts the size of a subject even when the camera and the subject are simultaneously fixed and photographed. When the camera zooms toward the subject, it is called zoom-in, and when the camera zooms away from the subject, it is called zoom-out. Zoom-in enlarges the subject while reducing the depth of field, while zoom-out reduces the subject and increases the depth of field. 'Zooming' can be used interchangeably with 'Zoom'.

A camera may comprise a camera device. A camera device may comprise a camera module.

The camera device may comprise a first camera device **1000.** The camera device may comprise a second camera device **2000.** A camera device may comprise a plurality of camera devices. A camera device may comprise two camera devices. A camera device may comprise a dual camera device. Or, the camera device may comprise triple or more camera devices.

Hereinafter, a first camera device according to a present embodiment will be described with reference to drawings.

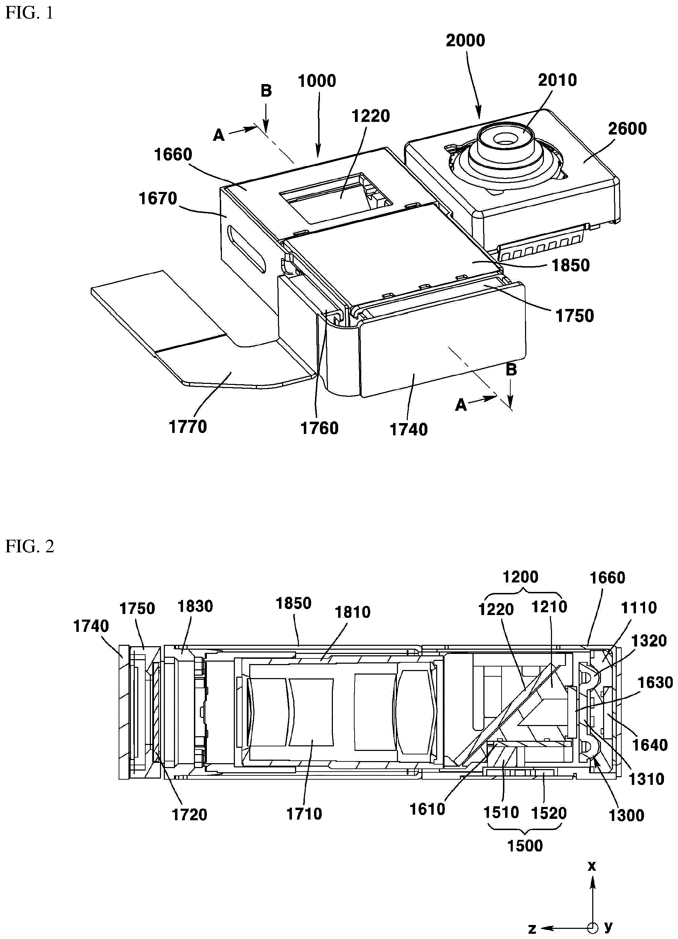

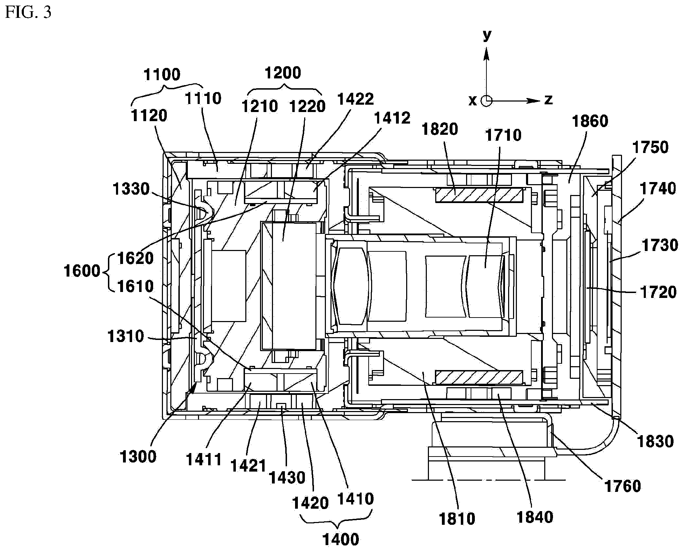

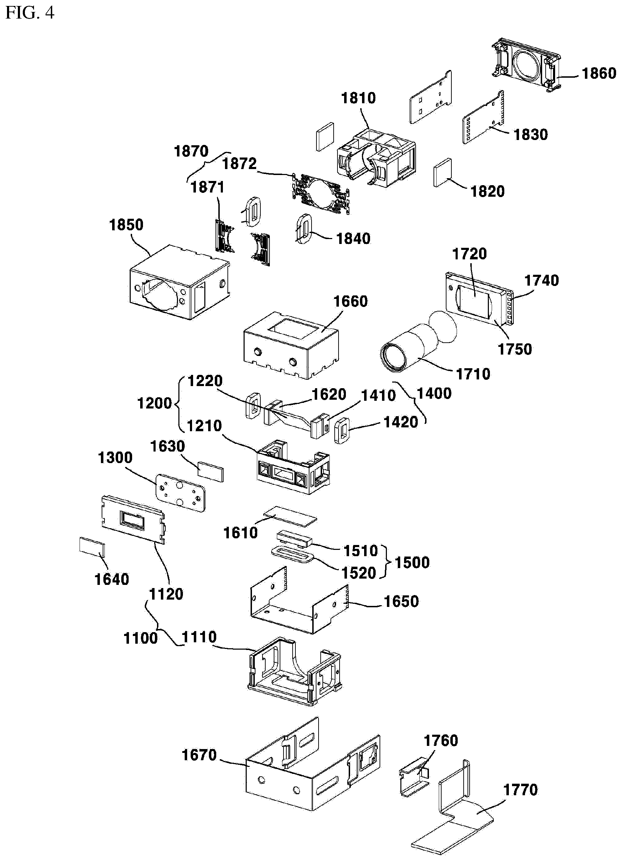

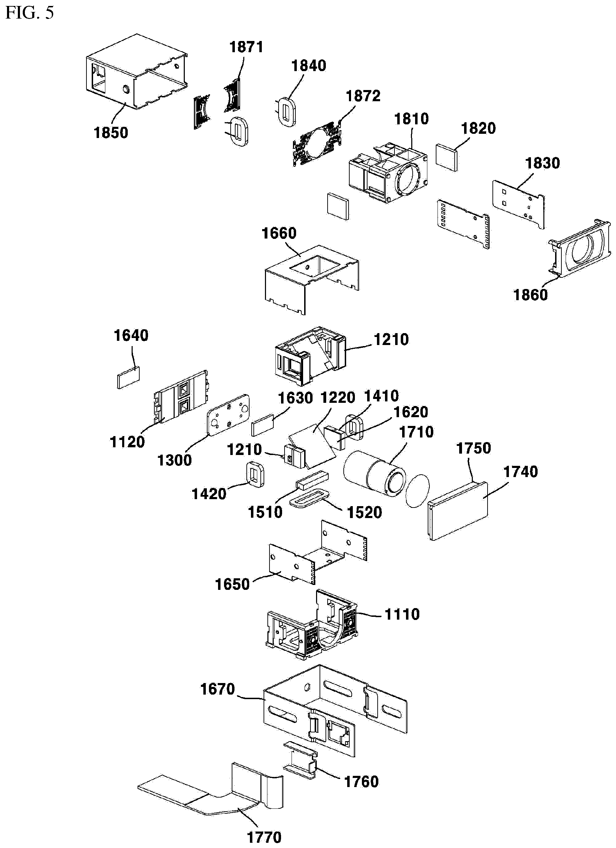

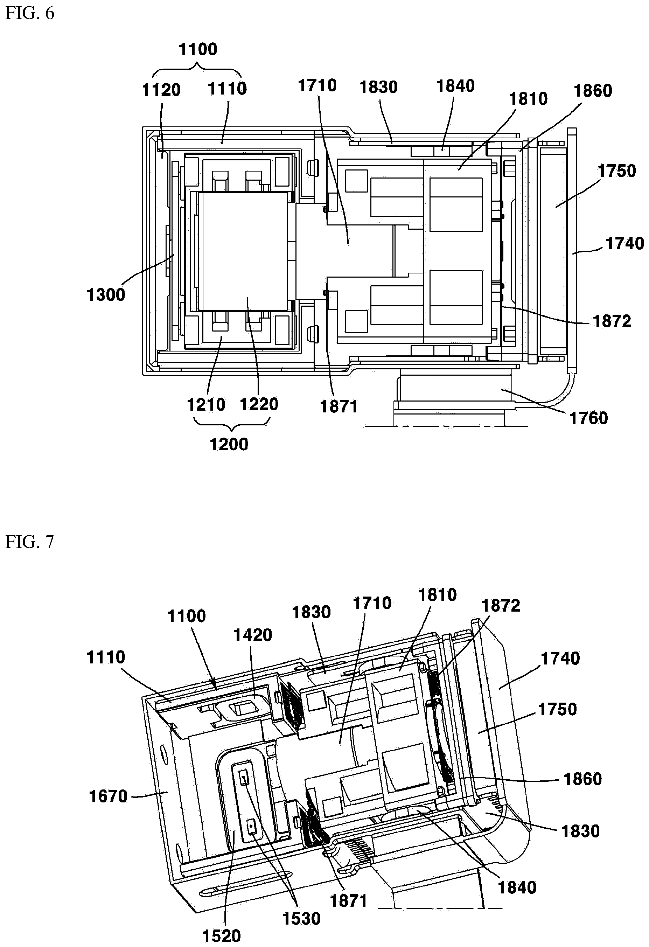

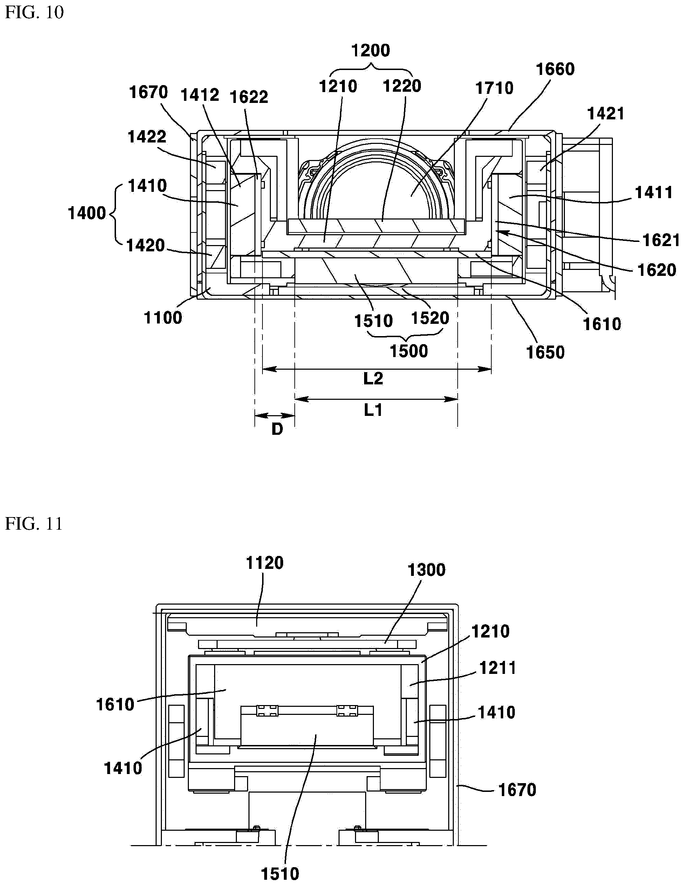

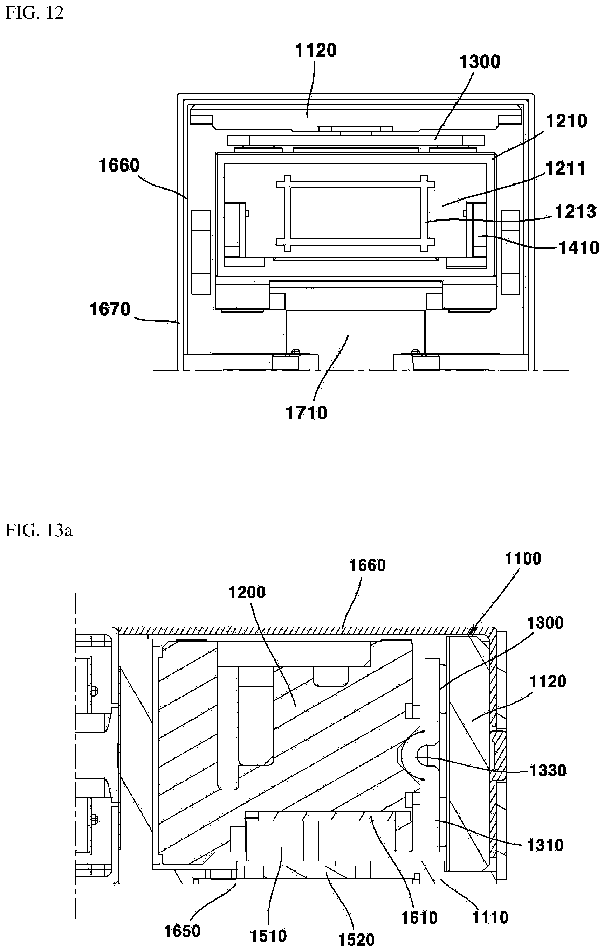

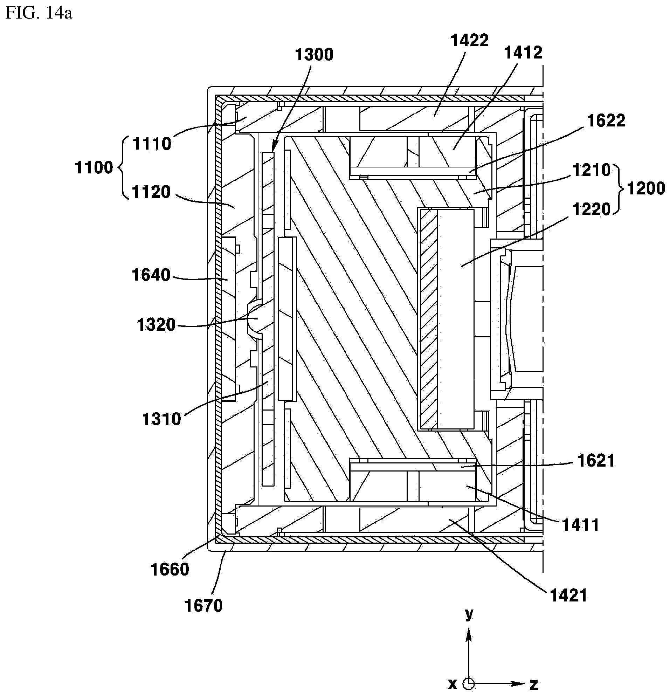

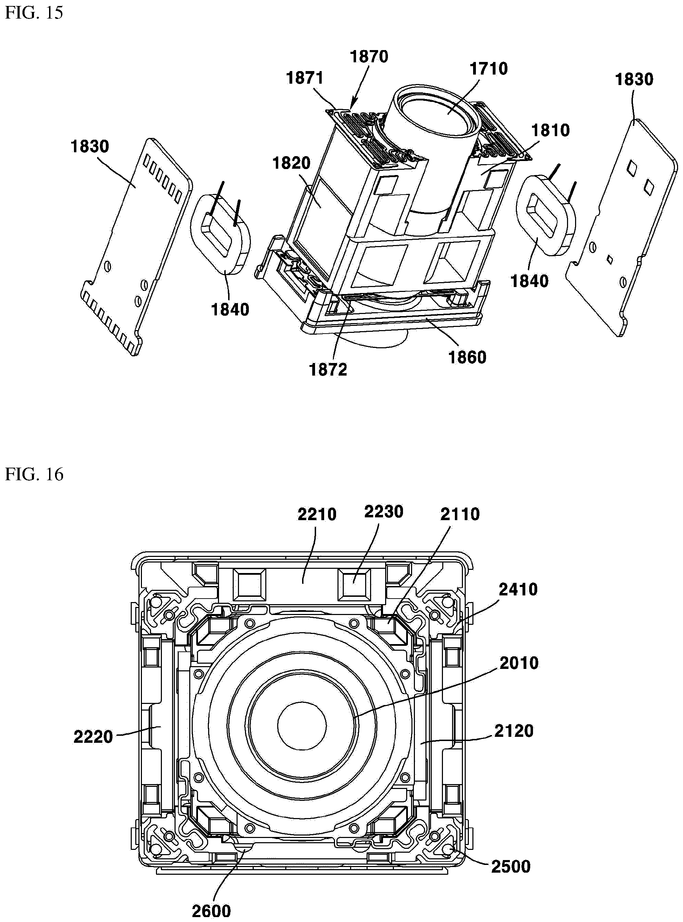

FIG. 1 is a perspective view illustrating a camera device according to a present embodiment; FIG. 2 is a cross-sectional view viewed from A-A in FIG. 1; FIG. 3 is a cross-sectional view viewed from line B-B of FIG. 1; FIG. 4 is an exploded perspective view of a first camera device according to present embodiment; FIG. 5 is an exploded perspective view of a first camera device viewed from a direction different from that of FIG. 4; FIG. 6 is a plan view of a state in which a cover member is omitted in a first camera device according to present embodiment; FIG. 7 is a perspective view of a state in which a mover and a rotation plate are omitted in the first camera device of FIG. 6; FIGS. 8 and 9 are diagrams illustrating an assembly relationship between a mover, a rotation plate, and related configurations of a first camera device according to a present embodiment; FIG. 10 is a cross-sectional view of a mover and related configurations of a first camera device according to a present embodiment cut in a vertical direction and viewed from the front; FIG. 11 is a cross-sectional view of a mover and related configurations of a first camera device according to a present embodiment cut in a horizontal direction and viewed from below; FIG. 12 is a diagram of a state in which a second magnet and a first yoke are omitted in the first camera device of FIG. 11; FIGS. 13a to 13c are cross-sectional views illustrating a state in which a mover of a first camera device according to the present embodiment is tilted about a y-axis; FIGS. 14a to 14c are cross-sectional views illustrating a state in which a mover of a first camera device according to a present embodiment is tilted about an x-axis; and FIG. 15 is an exploded perspective view of a lens actuator provided for auto focus (AF) and zoom in a first camera device according to the present embodiment.

The first camera device **1000** may comprise a lens **1710.** The lens **1710** may be disposed between the prism **1220** and an image sensor **1730.** The lens **1710** may be aligned with the image sensor **1730.** The lens **1710** may be disposed at a position corresponding to the image sensor **1730.** The lens **1710** may be disposed inside a barrel. The lens **1710** may be coupled with a lens actuator. The lens **1710** may comprise a plurality of lenses.

The first camera device **1000** may comprise a filter **1720.** The filter **1720** may serve to block the light of a specific frequency band among the light passing through the lens **1710** from entering the image sensor **1730.** The filter **1720** may be disposed between the lens **1710** and the image sensor **1730.** The filter **1720** may be disposed in a sensor base **1750.** Or, the filter **1720** may be disposed in a base **1860.** The filter **1720** may comprise an infrared filter. The infrared filter may block light in the infrared region from being incident on the image sensor **1730.**

The first camera device **1000** may comprise an image sensor **1730.** In the image sensor **1730**, light passing through the lens **1710** and the filter **1720** may be incident and form an image. The image sensor **1730** may be disposed in the printed circuit board **1740.** The image sensor **1730** may be electrically connected to the printed circuit board **1740.** For an example, the image sensor **1730** may be coupled to the printed circuit board **1740** by surface mounting technology (SMT). As another example, the image sensor **1730** may be coupled to the printed circuit board **1740** using flip chip technology. The image sensor **1730** may be disposed such that an optical axis coincides with the lens **1710.** That is, the optical axis of the image sensor **1730** and the optical axis of the lens **1710** may be aligned. The image sensor **1730** may convert light irradiated onto an effective image area of the image sensor **1730** into an electrical signal. The image sensor **1730** may be any one among a charge coupled device (CCD), a metal oxide semiconductor (MOS), a CPD, and a CID.

The first camera device **1000** may comprise a printed circuit board (PCB) **1740.** The printed circuit board **1740** may be a substrate or a circuit board. A sensor base **1750** may be disposed in the printed circuit board **1740.** The printed circuit board **1740** may be electrically connected to a first driving unit **1400**, a second driving unit **1500**, and a coil **1840.** The printed circuit board **1740** may comprise various circuits, elements, control units, and the like to convert an image formed by the image sensor **1730** into an electrical signal and transmit the converted electrical signal to an external device.

The first camera device **1000** may comprise a sensor base **1750.** The sensor base **1750** may be disposed in the printed circuit board **1740.** The sensor base **1750** may comprise a protruded portion at which the filter **1720** is disposed. An opening may be formed in a portion of the sensor base **1750** where the filter **1720** is disposed so that light passing through the filter **1720** may be incident to the image sensor **1730.** The adhesive member may couple or attach the base **2310** to the sensor base **1750.** The adhesive member may comprise any one or more among an epoxy, a thermosetting adhesive, and an ultraviolet curable adhesive.

The first camera device **1000** may comprise a support part **1760.** The support part **1760** may be disposed between a connecting substrate **1770** and a cover member **1850.** The support portion **1760** may be coupled to the cover member **1850** to fix the connecting substrate **1770.**

The first camera device **1000** may comprise a connecting substrate **1770.** The connecting substrate **1770** may be a configuration for connecting the first camera device **1000** to an external component. For an example, the connecting substrate **1770** may be connected to a power supply unit and/or a control unit.

The first camera device **1000** may comprise a prism actuator. The prism actuator may move a prism. The prism actuator may tilt the prism. The prism actuator may tilt the prism about two axes. The prism actuator may perform handshake correction function. The prism actuator can perform handshake correction function for 2 axes.

The first camera device **1000** may comprise a housing **1100.** The housing **1100** may be formed to surround at least a portion of the mover **1200.** The housing **1100** may be disposed outside the mover **1200.** The housing **1100** may be disposed inside a first cover member **1660** and a second cover member **1670.** The housing **1100** may be formed of an injection molding material. The housing **1100** may be a fixed part even when the mover **1200** and the rotation plate **1300** move.

The housing **1100** may comprise a body unit **1110.** The body unit **1110** may comprise a portion surrounding at least a portion of the mover **1200.** A first coil **1420** and a second coil **1520** may be disposed in the body unit **1110.** The body unit **1110** may be spaced apart from the mover **1200.**

The housing **1100** may comprise a side wall portion **1120.** The side wall portion **1120** may be coupled to the body unit **1110.** The side wall portion **1120** may be coupled to the body unit **1110** in a sliding manner. The side wall portion **1120** may be inserted into and coupled to the groove of the body unit **1110.** The side wall portion **1120** may be disposed in front of the rotation plate **1300.** The side wall portion **1120** may come into contact with the rotation plate **1300.**

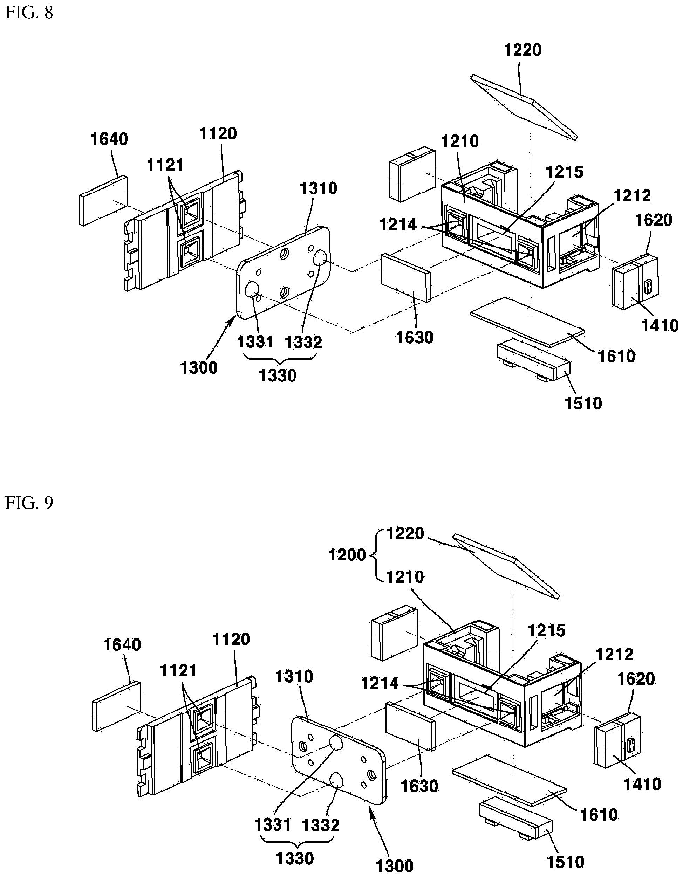

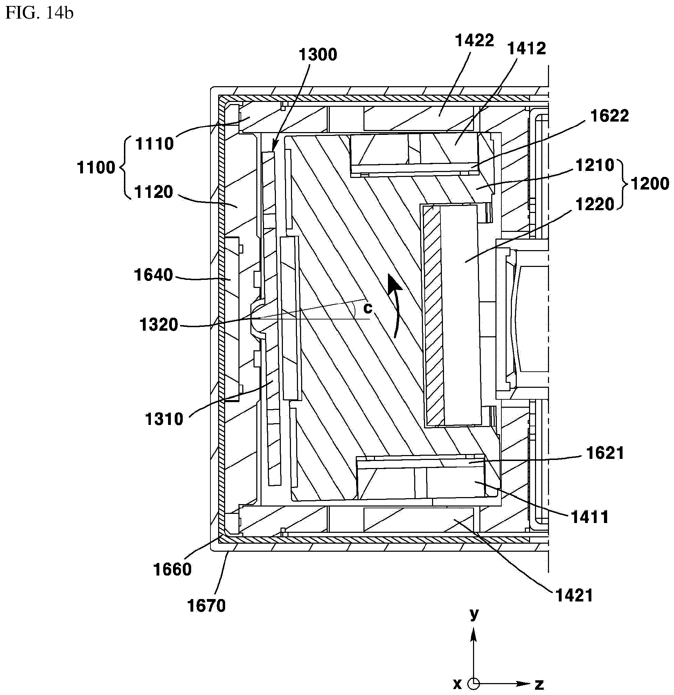

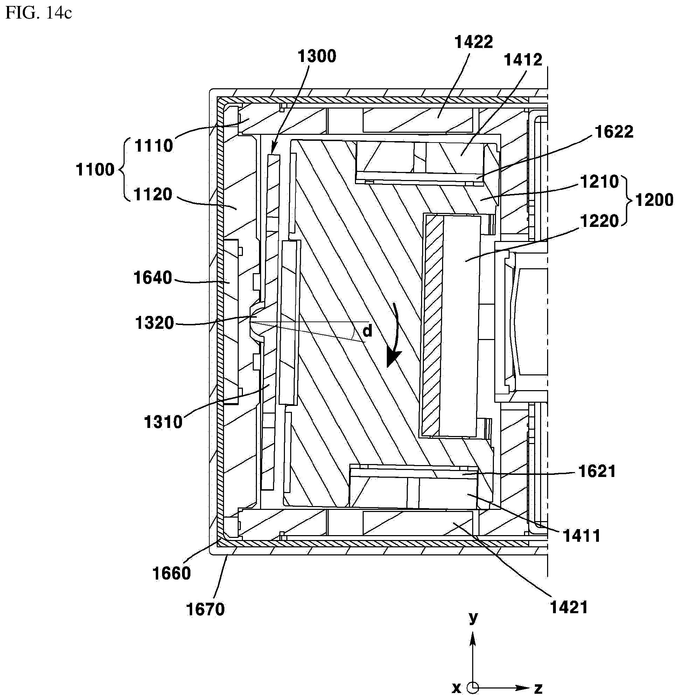

The side wall portion **1120** of the housing **1100** may comprise a groove **1121.** The groove **1121** may accommodate at least a portion of the first protruded portion **1320** of the rotation plate **1300.** The housing **1100** may comprise a groove **1121** in which at least a portion of the first protruded portion **1320** is disposed. The groove **1121** may comprise a shape corresponding to at least a portion of the first protruded portion **1320.** The groove **1121** may be formed in a shape different from that of the first protruded portion **1320.** As illustrated in FIGS. 9, 14b and 14c, the first protruded portion **1320** being disposed in the groove **1121** of the housing **1100** may be tilted about an x-axis (first axis).

The first camera device **1000** may comprise a mover **1200.** The mover **1200** may be disposed inside the housing **1100.** The mover **1200** may move inside the housing **1100.** The mover **1200** may be tilted about at least two axes. The mover **1200** may be pivotally driven. The mover **1200** may be tilted with respect to a first axis. The mover **1200** may be rotated with respect to a first axis. The mover **1200** may be tilted with respect to a second axis perpendicular to the first axis. The mover **1200** may be rotated with respect to a second axis.

The mover **1200** may comprise a holder **1210.** The holder **1210** of the mover **1200** may comprise both side surfaces and a first surface and a second surface connecting the both side surfaces. At this time, the first magnet **1410** may be disposed on both side surfaces of the mover **1200.** A second magnet **1510** may be disposed on a first surface of the mover **1200.** The rotation plate **1300** may be disposed on a second surface of the mover **1200.**

The holder **1210** of the mover **1200** may comprise a first groove **1211.** The first groove **1211** may be formed on a first surface of the holder **1210.** At this time, the first yoke **1610** and the second magnet **1510** may be disposed inside the first groove **1211.** Meanwhile, at least a portion of the first magnet **1410** may be open toward the first groove **1211** of the mover **1200.** That is, at least a portion of the first magnet **1410** can be seen when looking at the mover **1200** from below.

The holder **1210** of the mover **1200** may comprise a second groove **1212.** The second groove **1212** may be formed on both side surfaces of the mover **1200.** At this time, the first magnet **1410** may be disposed in a second groove **1212** of the mover **1200.** The second yoke **1620** may be disposed in the second groove **1212** of the mover **1200.** The groove **1212** may be formed in a shape corresponding to the second yoke **1620** and the first magnet **1410.** The groove **1212** may be formed to a depth at which the first magnet **1410** is not protruded. Or, a portion of the first magnet **1410** being disposed in the groove **1212** may be protruded.

The holder **1210** of the mover **1200** may comprise a third groove **1213.** The third groove **1213** may be formed in the first groove **1211** of the mover **1200.** An adhesive for fixing the first yoke **1610** to the mover **1200** may be disposed in the third groove **1213** of the mover **1200.** The third groove **1213** may be an 'adhesive accommodating groove'. The third groove **1213** may be formed by being recessed into the bottom surface of the first groove **1211** of the mover **1200.**

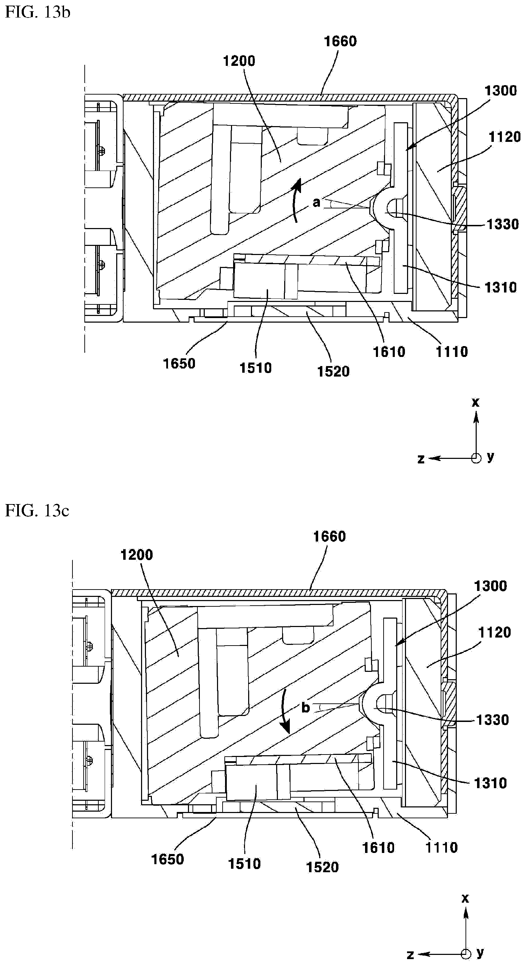

The holder **1210** of the mover **1200** may comprise a groove **1214.** The groove **1214** may be a 'rotation plate accommodating groove'. At least a portion of the second protruded portion **1330** of the rotation plate **1300** may be disposed in the groove **1214.** The groove **1214** may accommodate at least a portion of the second protruded portion **1330** of the rotation plate **1300.** The groove **1214** may comprise a shape corresponding to at least a portion of the second protruded portion **1330.** The groove **1214** may be formed in a shape different from that of the second protruded portion **1330.** As illustrated in FIGS. 8, 13b and 13c, the second protruded portion **1330** being disposed in the groove **1214** of the mover **1200** may be tilted about a y-axis (second axis).

The holder **1210** of the mover **1200** may comprise a groove **1215.** The groove **1215** may be a 'third magnet accommodating groove'. A third magnet **1630** may be disposed in the groove **1215.** The groove **1215** may be formed in a shape corresponding to that of the third magnet **1630.** The groove **1215** may be formed on a second surface of the mover **1200.**

The mover **1200** may comprise a reflective member. The reflective member may comprise a prism **1220.** The prism **1220** may be disposed in holder **1210.** The prism **1220** may comprise a reflective surface that reflects light incident on the prism **1220.** The prism **1220** may be disposed in the holder **1210** so that the reflective surface of the prism **1220** is inclined. The prism **1220** may change an optical path of light incident on the prism **1220.** The prism **1220** may reflect light incident along a first axis direction toward a third axis direction. The prism **1220** may reflect light incident along an x-axis direction toward a z-axis direction. The prism **1220** may comprise a mirror.

The first camera device **1000** may comprise a guide member. The guide member may guide the movement of the mover **1200** against the housing **1100.** The guide member may comprise a rotation plate **1300.** The rotation plate **1300** may be a 'driving plate'. The rotation plate **1300** may be disposed between the housing **1100** and the mover **1200.** The rotation plate **1300** may be disposed between the housing **1100** and the mover **1200** in a third axis direction perpendicular to the first and second axes. The rotation plate **1300** may be disposed between the third magnet **1630** and the fourth magnet **1640.** The rotation plate **1300** may guide the mover **1200** to be tilted about two axes against the housing **1100.**

The rotation plate **1300** may comprise a base **1310.** The base **1310** may have a plate shape. The base **1310** may be disposed between the mover **1200** and the housing **1100.** The base **1310** may comprise a first surface facing the housing **1100** and a second surface facing the mover **1200.**

The rotation plate **1300** may comprise a first protruded portion **1320.** The first protruded portion **1320** may be protruded from a first surface of the base **1310.** The first protruded portion **1320** may have a hemispherical shape. The first protruded portion **1320** may comprise a plurality of first protruded portions. The first protruded portion **1320** may comprise a first-first protruded portion **1321** and a first-second protruded portion **1322.** The first protruded portion **1320** may comprise two first protruded portions **1321** and **1322.** The two first protruded portions **1321** and **1322** may be spaced apart in a first direction. The first protruded portion **1320** may be integrally formed with the base **1310.** The first protruded portion **1320** may be disposed in the groove **1121** of the housing **1100.** As illustrated in FIGS. 9, 14b, and 14c, the first protruded portion **1320** may be tilted about an x-axis (first axis) while being inserted into the groove **1121** of the housing **1100.**

The rotation plate **1300** may comprise a second protruded portion **1330.** The second protruded portion **1330** may be protruded from a second surface at an opposite side of the first surface of the base **1310.** The second protruded portion **1330** may have a hemispherical shape. The second protruded portion **1330** may be formed as a portion of the rotation plate **1300** is being bent. At this time, a groove corresponding to the second protruded portion **1330** may be formed at an opposite side of the second protruded portion **1330.**

The second protruded portion **1330** may comprise a plurality of second protruded portions. The second protruded portion **1330** may comprise a second-first protruded portion **1331** and a second-second protruded portion **1332.** The second protruded portion **1330** may comprise two second protruded portions **1331** and **1332.** The two second protruded portions **1331** and **1332** may be spaced apart in a second direction perpendicular to the first direction. The second protruded portion **1330** may be integrally formed with the base **1310.** The second protruded portion **1330** may be disposed in the groove **1214** of the mover **1200.** As illustrated in FIGS. 8, 13b and 13c, the second protruded portion **1330** may be tilted about a y-axis (second axis) while being inserted into the groove **1214** of the mover **1200.**

In a modified embodiment, the rotation plate **1300** may comprise a groove replacing at least one of the first protruded portion **1320** and the second protruded portion **1330.** In this case, the first camera device **1000** may comprise a ball being formed separately from the rotation plate **1300** and disposed in the groove of the rotation plate **1300.**

The first camera device **1000** may comprise a first driving unit **1400.** The first driving unit **1400** may rotate the mover **1200** about a first axis. The first magnet **1410** and the first coil **1420** may rotate the mover **1200** about a first axis. The first magnet **1410** and the first coil **1420** may tilt the mover **1200** about a first axis. At this time, a light may be incident along a first axis.

The first driving unit **1400** may comprise a first magnet **1410.** The first magnet **1410** may be disposed on both side surfaces of the mover **1200.** The first magnet **1410** may comprise a magnet being formed to be a single one by bonding two-pole magnetized magnets together with an adhesive. Through this, even though the first magnet **1410** comprises four polarities, a portion having a neutral polarity can be minimized. Through this, the influence of the magnetic force of the first magnet **1410** on the second camera device **2000** can be minimized.

The first magnet **1410** may comprise a plurality of magnets. The first magnet **1410** may comprise two first magnets. The first magnet **1410** may comprise a first side magnet **1411** being disposed on one side surface of both side surfaces of the mover **1200** and a second side magnet **1412** being disposed on the other side surface of both side surfaces of the mover **1200.** However, any one of the first side magnet **1411**, the second side magnet **1412**, and the second magnet **1510** may be referred to as a first magnet, the other one may be referred to as a second magnet, and the remaining one may be referred to as a third magnet. The first to third magnets may be 'driving magnets'.

In a second axis direction, the distance between the first magnet **1410** and the second magnet **1510** (refer to **D** in FIG. 10) may be smaller than 1/4 of the length of the second magnet **1510** in the corresponding direction (refer to **L1** in FIG. 10). Or, in a second axis direction, the distance between the first magnet **1410** and the second magnet **1510** (refer to **D** in FIG. 10) may be less than 1/8 of the length of the second magnet **1510** in the corresponding direction (refer to **L1** in FIG. 10).

The first driving unit **1400** may comprise a first coil **1420.** The first coil **1420** may be disposed in the substrate **1650.** The first coil **1420** may face the first magnet **1410.** The first coil **1420** may interact with the first magnet **1410** electromagnetically. As illustrated in FIGS. 14b and 14c, the first coil **1420** may be used to tilt the mover **1200** about an x-axis. When current is applied to the first coil **1420**, the mover **1200** may be rotated with respect to the first protruded portion **1320** of the rotation plate **1300.** As illustrated in FIG. 14b, when a current is applied to the first coil **1420** in a first direction, the mover **1200** may be rotated to one side about the first protruded portion **1320** of the rotation plate **1300** (refer to **c** in FIG. 14b). In addition, as illustrated in FIG. 14c, when a current is applied to the first coil **1420** in a second direction, which is opposite to the first direction, the mover **1200** may be rotated to the other side about the first protruded portion **1320** of the rotation plate **1300** (refer to **d** in FIG. 14c).

The first coil **1420** may comprise a plurality of first coils. The first coil **1420** may comprise two first coils **1421** and **1422.** The first coil **1420** may comprise a first-first coil **1421** and a first-second coil **1422.** The first-first coil **1421** may face the first side magnet **1411.** The first-second coil **1422** may face the second side magnet **1412.** The first-first coil **1421** and the first-second coil **1422** may be electrically separated so that they can be individually controlled. Or, the first-first coil **1421** and the first-second coil **1422** may be electrically connected.

However, in a modified embodiment, the first coil **1420** may be disposed in the mover **1200** and the first magnet **1410** may be disposed in the housing **1100.**

The first camera device **1000** may comprise a Hall sensor **1430.** The Hall sensor **1430** may be disposed in the substrate **1650.** The Hall sensor **1430** may be disposed inside the first coil **1420.** The Hall sensor **1430** may detect the first magnet **1410.** The Hall sensor **1430** may detect the magnetic force of the first magnet **1410.** The Hall sensor **1430** may be used to feedback the driving of the mover **1200.** The Hall sensor **1430** may comprise a plurality of Hall sensors.

The first camera device **1000** may comprise a second driving unit **1500.** The second driving unit **1500** may rotate the mover **1200** about a second axis perpendicular to the first axis. The second magnet **1510** and the second coil **1520** may rotate the mover **1200** about a second axis perpendicular to the first axis.

The second driving unit **1500** may comprise a second magnet **1510.** The second magnet **1510** may be disposed in the yoke. The second magnet **1510** may comprise a 2-pole magnet in which the polarities of an upper surface and a lower surface are different. Or, the second magnet **1510** may comprise a 4-pole magnetized magnet having four polarities. The second magnet **1510** may be disposed in the mover **1200.** The second magnet **1510** may be coupled to the mover **1200.** The second magnet **1510** may be fixed to the mover **1200.** The second magnet **1510** may move together with the mover **1200.** The second magnet **1510** and the second coil **1520** may rotate the mover **1200** about a second axis perpendicular to the first axis. The second magnet **1510** and the second coil **1520** may tilt the mover **1200** about a second axis perpendicular to the first axis. At this time, a light may be incident along the first axis.

The second driving unit **1500** may comprise a second coil **1520.** The second coil **1520** may be disposed in the substrate **1650.** The second coil **1520** may face the second magnet **1510.** The second coil **1520** may interact with the second magnet **1510** electromagnetically. As illustrated in FIGS. 13b and 13c, the second coil **1520** may be used to tilt the mover **1200** about a y-axis. When current is applied to the second coil **1520**, the mover **1200** may be rotated with respect to the second protruded portion **1330** of the rotation plate **1300.** As illustrated in FIG. 13b, when a current is applied to the second coil **1520** in a first direction, the mover **1200** may be rotated to one side about the second protruded portion **1330** of the rotation plate **1300** (refer to **a** in FIG. 13b). In addition, as illustrated in FIG. 13c, when a current is applied to the second coil **1520** in a second direction, which is opposite to the first direction, the mover **1200** may be rotated to the other side about the second protruded portion **1330** of the rotation plate **1300** (refer to **d** in FIG. 13c).

However, in a modified embodiment, the second coil **1520** may be disposed in the mover **1200** and the second magnet **1510** may be disposed in the housing **1100.**

The first camera device **1000** may comprise a Hall sensor **1530.** The Hall sensor **1530** may be disposed in the substrate **1650.** The Hall sensor **1530** may be disposed inside the second coil **1520.** The Hall sensor **1530** may detect the second magnet **1510.** The Hall sensor **1530** may detect the magnetic force of the second magnet **1510.** The Hall sensor **1530** may be used to feedback the driving of the mover **1200.** The Hall sensor **1530** may comprise a plurality of Hall sensors.

The first camera device **1000** may comprise a first yoke **1610.** The first yoke **1610** may be disposed on one surface of the second magnet **1510.** Or, as a modified embodiment, the first yoke **1610** may be disposed on one side surface of the second coil **1520.** The first yoke **1610** may be disposed between the second magnet **1510** and the mover **1200.** The first yoke **1610** may be disposed on a first side surface of the mover **1200** between both side surfaces of the mover **1200.** The first yoke **1610** may be overlapped with the mover **1200** and the second magnet **1510** in a first axis direction. In the second axis direction, the length of the first yoke **1610** (refer to **L2** in FIG. 10) may be longer than the length of the second magnet **1510** (refer to **L1** in FIG. 10). As a modified embodiment, in the second axis direction, the length of the first yoke **1610** may be the same as that of the second magnet **1510.** In the second axis direction, the length of the first yoke **1610** (refer to **L2** in FIG. 10) may be equal to the distance between the first side magnet **1411** and the second side magnet **1412.** The first yoke **1610** may connect the two second yokes **1621** and **1622.** However, as a modified embodiment, the first yoke **1610** may be spaced apart from the second yoke **1620.** The first yoke **1610** may be formed as a separate member from the second yoke **1620.** However, as a modified embodiment, the first yoke **1610** and the second yoke **1620** may be integrally formed. The first yoke **1610** may be formed of SPC or SUS 4 series material. When it is formed of SPC, plating for oxidation prevention is required, and when it is formed of SUS 4 series, plating may be unnecessary.

The length of the first yoke **1610** in a second axis direction may be 1 to 2 times the length of the second magnet **1510.** The length of the first yoke **1610** in a second axis direction may be 1.2 to 1.6 times the length of the second magnet **1510.** The length of the first yoke **1610** in a second axis direction may be 1.3 to 1.5 times the length of the second magnet **1510.** The length of the first yoke **1610** in a second axis direction may be approximately 1.4 times the length of the second magnet **1510.**

In the present embodiment, a yoke may be attached to the prism actuator of the first camera device **1000** to increase the electromagnetic force and reduce leakage magnetic flux to the outside. The attachment position of the yoke may be a surface of the magnet or a surface of the coil. According to the present embodiment, the magnetic leakage value at a contrast surface can be reduced by more than two times when there is no yoke. When applying a multi-camera device, the second camera device being disposed at a side of the first camera device **1000** applies two magnet structures in the case of an AF module, and in case of OIS module, 3 magnet structures can be applied. The yoke may be formed as large as possible so that the leakage flux of the y-axis of the yoke is minimized. The first yoke **1610** may be formed in a shape and size corresponding to the first groove **1211** of the mover **1200.**

The first camera device **1000** may comprise a second yoke **1620.** The second yoke **1620** may be disposed on one surface of the first magnet **1410.** Or, as a modified embodiment, the second yoke **1620** may be disposed on one side surface of the first coil **1420.** The second yoke **1620** may be disposed between the first magnet **1410** and the mover **1200.** The second yoke **1620** may be spaced apart from the first yoke **1610.** The second yoke **1620** may be connected to the first yoke **1610.** The second yoke **1620** may be disposed between the first magnet **1410** and the holder **1210.** The second yoke **1620** may be formed in a shape corresponding to that of the first magnet **1410.** The second yoke **1620** may be formed of SPC or SUS 4 series material. When it is formed of SPC, plating for oxidation prevention is required, and when it is formed of SUS 4 series, plating may be unnecessary.

The second yoke **1620** may comprise a plurality of second yokes. The second yoke **1620** may comprise two second yokes **1621** and **1622.** The second yoke **1620** may comprise a second-first yoke **1621** and a second-second yoke **1622.** The second yoke **1620** may comprise two second yokes **1621** and **1622** being disposed between the two first magnets **1411** and **1412** and the mover **1200.** The two second yokes may be referred to as a second yoke **1621** and a third yoke **1622.**

The first camera device **1000** may comprise a third magnet **1630.** The third magnet **1630** may be disposed in the mover **1200.** The third magnet **1630** may be disposed on a second surface of the mover **1200.** The third magnet **1630** may be fixed to the mover **1200** by an adhesive. The 'third' in the third magnet **1630** is for distinction from other magnets, and the third magnet **1630** may be called a 'fourth magnet' or the like.

The first camera device **1000** may comprise a fourth magnet **1640.** The fourth magnet **1640** may be disposed in the housing **1100** so that an attractive force act with the third magnet **1630.** The fourth magnet **1640** may be disposed on the side wall portion **1120** of the housing **1100.** As a modified embodiment, the fourth magnet **1640** may be disposed in the second cover member **1670.** The fourth magnet **1640** may comprise a second surface facing a first surface of the third magnet **1630.** The second surface of the fourth magnet **1640** may have a polarity different from that of the first surface of the third magnet **1630.** Through this, an attractive force may act between the third magnet **1630** and the fourth magnet **1640.** The mover **1200** may press the rotation plate **1300** toward the side wall portion **1120** of the housing **1100** by the force of the third magnet **1630** being pulled toward the fourth magnet **1640.** Through this, even when the mover **1200** moves, the contact state of the mover **1200**, the rotation plate **1300**, and the housing **1100** can be maintained. The 'fourth' in the fourth magnet **1640** is for distinction from other magnets, and the fourth magnet **1640** may be called a 'fifth magnet' or the like. The fourth and fifth magnets may be 'magnets for an attractive force'.

The first camera device **1000** may comprise a substrate **1650.** The substrate **1650** may comprise a flexible printed circuit board (FPCB). The substrate **1650** may be electrically connected to the printed circuit board **1740.** The substrate **1650** may provide current to the first coil **1420**, the second coil **1430**, and the Hall sensors **1430** and **1530.**

The first camera device **1000** may comprise a first cover member **1660.** The first cover member **1660** may be a 'cover can' or a 'shield can'. The first cover member **1660** may be disposed outside the housing **1100.** The first cover member **1660** may cover the housing **1100.** The first cover member **1660** may accommodate the mover **1200.** The first cover member **1660** may be formed of a metal material. The first cover member **1660** may block electromagnetic interference (EMI). The first cover member **1660** may comprise an upper plate and side plates being extended downward from the upper plate.

The first camera device **1000** may comprise a second cover member **1670.** The second cover member **1670** may be a 'cover can' or a 'shield can'. The second cover member **1670** may be disposed to cover the side plate of the first cover member **1660.** However, in a modified embodiment, the first cover member **1660** may cover the second cover member **1670.** The second cover member **1670** may be disposed outside the housing **1100.** The second cover member **1670** may cover the housing **1100.** The second cover member **1670** may be formed of a metal material. The second cover member **1670** may block electromagnetic interference (EMI). The second cover member **1670** may comprise a plurality of side plates.

The first camera device **1000** may comprise a lens actuator. The lens actuator may move the lens **1710** in a third axis direction (z axis) perpendicular to the first axis (x axis) and the second axis (y axis). The lens actuator may move the lens **1710** in an optical axis direction of the image sensor **1730.** Through this, the lens actuator may perform any one or more of autofocus (AF) and a zoom functions. The lens actuator may move only some of the plurality of lenses. Or, the lens actuator may divide the plurality of lenses into a plurality of groups and individually move them for each of the plurality of groups.

The first camera device **1000** may comprise a mover **1810.** The mover **1810** may be disposed inside the cover member **1850.** The mover **1810** may be movably disposed inside the cover member **1850.** The mover **1810** may be coupled to the lens **1710.** The mover **1810** may be supported elastically by an elastic member **1870.**

The first camera device **1000** may comprise a magnet **1820.** The magnet **1820** may be disposed on an outer circumferential surface of the mover **1810.** The magnet **1820** may comprise a surface facing the coil **1840.** The magnet **1820** may comprise a plurality of magnets. The magnet **1820** may comprise two magnets.

The first camera device **1000** may comprise a second substrate **1830.** The second substrate **1830** may be disposed inside the cover member **1850.** The second substrate **1830** may be electrically connected to the substrate **1650.** The second board **1830** may electrically connect the board **1650** and the printed circuit board **1740.** The second substrate **1830** may comprise FPCB.

The first camera device **1000** may comprise a coil **1840.** The coil **1840** may be disposed in the second substrate **1830.** The coil **1840** may be disposed to face the magnet **1820.** The coil **1840** may face the magnet **1820.** The coil **1840** may interact electromagnetically with magnet **1820.** When a current is applied to the coil **1840**, an electromagnetic field may be formed around the coil **1840.** Through this, the magnet **1820** may move. At this time, the magnet **1820** may move together with the mover **1810.** When a current is applied to the coil **1840** in a first direction, the mover **1810** may move in a direction away from the image sensor **1730.** When a second direction opposite to the first direction is applied to the coil **1840**, the mover **1810** may move in a direction being closer to the image sensor **1730.**

The first camera device **1000** may comprise a Hall sensor. The Hall sensor may be disposed at a position corresponding to the magnet **1820.** The Hall sensor may detect the position of the mover **1810** by detecting the magnetic force of the magnet **1820.** The Hall sensor may be disposed in the second substrate **1830.** The Hall sensor may be disposed inside the coil **1840.** The Hall sensor may be used for feedback of one or more of an auto focus function and a zoom function.

The first camera device **1000** may comprise a cover member **1850.** The cover member **1850** may be a 'cover can' or a 'shield can'. The cover member **1850** may be disposed outside the mover **1810.** The cover member **1850** may be formed of a metal material. The cover member **1850** may block electromagnetic interference (EMI). The cover member **1850** may comprise a first plate comprising a surface facing forward, and a second plate being extended in an optical axis direction from the first plate.

The first camera device **1000** may comprise a base **1860.** The base **1860** may be disposed in a direction from the mover **1810** toward the image sensor **1730.** The base **1860** may function as a stopper toward one side of the mover **1810.** The base **1860** may be coupled with the cover member **1850.**

The first camera device **1000** may comprise an elastic member **1870.** The elastic member **1870** may be coupled to the mover **1810.** The elastic member **1870** may elastically guide the movement of the mover **1810.** At least a portion of the elastic member **1870** may have elasticity. When a current is applied to the coil **1840** and the mover **1810** moves, at least a portion of the elastic member **1870** may be deformed. Thereafter, when the current applied to the coil **1840** is stopped, the elastic member **1870** may be restored by the elastic force of the elastic member **1870.** At this time, the mover **1810** may also move to the initial position. The elastic member **1870** may be formed of metal. The elastic member **1870** may be formed of a leaf spring.

The elastic member **1870** may comprise a first elastic member **1871.** The first elastic member **1871** may be coupled to the mover **1810.** The first elastic member **1871** may be disposed in front of the second elastic member **1872.** The first elastic member **1871** may comprise two elastic units spaced apart from each other. The first elastic member **1871** may be used as a conductive line for supplying electricity.

The elastic member **1870** may comprise a second elastic member **1872.** The second elastic member **1872** may connect the mover **1810** and the base **1860.** The second elastic member **1872** may be disposed at a rear side of the first elastic member **1871.** The second elastic member **1872** may comprise an outer side portion being coupled to the base **1860**, an inner side portion being coupled to the mover **1810**, and a connection portion for connecting the outer side portion and the inner side portion.

The first camera device **1000** according to the present embodiment may comprise: a first housing; a first mover being disposed in the first housing; and a first unit comprising a yoke being disposed between the first mover and the first housing. At this time, the first housing may be the housing **1100**, and the first mover may be the mover **1200.** The first camera device **1000** may comprise: a second housing; a second unit comprising a second mover being disposed in the second housing. The first unit may perform a handshake correction function. The second unit may perform a focusing function. The first mover may comprise a first surface and a second surface being disposed in a direction perpendicular to the first surface. The yoke of the first unit may comprise: a first yoke **1610** disposed between the first surface of the first mover and the first housing; a second yoke **1620** being disposed between the second surface of the first mover and the first housing.

The first yoke **1610** and the second yoke **1620** may be disposed parallel to the moving direction of the second mover. A first mover, a first yoke **1610**, a second magnet **1510**, and a second coil **1520** may be sequentially disposed along a first axis. The first yoke **1610** may have an upper surface or a lower surface perpendicular to the first axis. At least a portion of the first yoke **1610** may be overlapped with the first magnet **1410** in a third axis direction.

The driving plate may be disposed between the first housing and the first mover. The driving plate may be disposed between the first housing and the first mover in a third axis direction. The first mover may comprise a reflective member. The reflective member may comprise a prism **1220.** Light may be incident on the reflective member along a first axis. The reflective member may reflect light to a lens module being coupled to the second mover. The reflective member may bend or refract light to a lens module being coupled to the second mover.

The second yoke **1620** may be disposed between the first magnet **1410** and the first mover. In a second axis direction, the length of the first yoke **1610** may be longer than that of the second magnet **1510.** The area of the first yoke **1610** may be larger than that of the second magnet **1510.** The length of the long axis of the first yoke **1610** may be greater than the length of the long axis of the second magnet **1510.** The area of one surface of the first yoke **1610** may be larger than the area of one surface of the second magnet **1510** facing the first yoke **1610.** The second yoke **1620** may comprise two second yokes being disposed at an opposite side of the first mover. At this time, the first yoke **1610** and the two second yokes may form a '⊂' shape.

Hereinafter, a second camera device according to present embodiment will be described with reference to drawings.

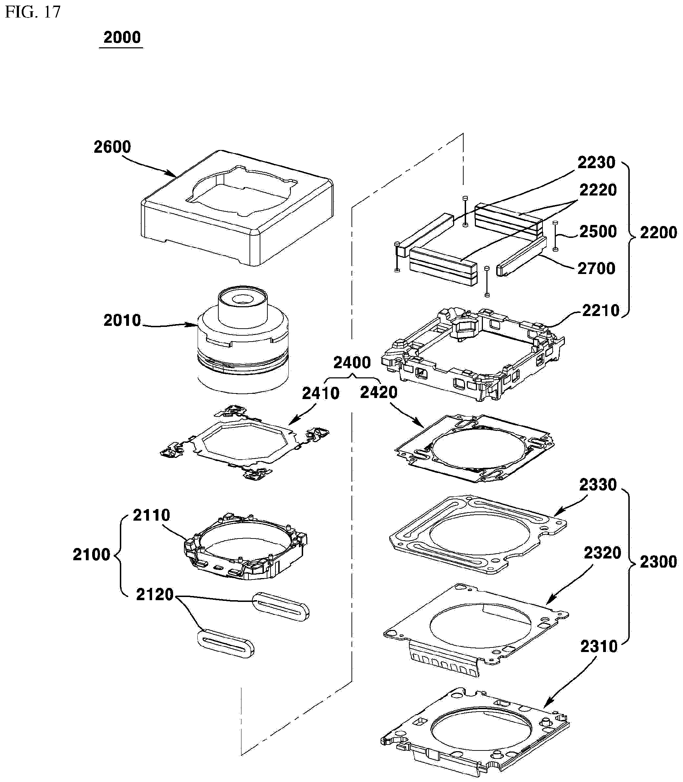

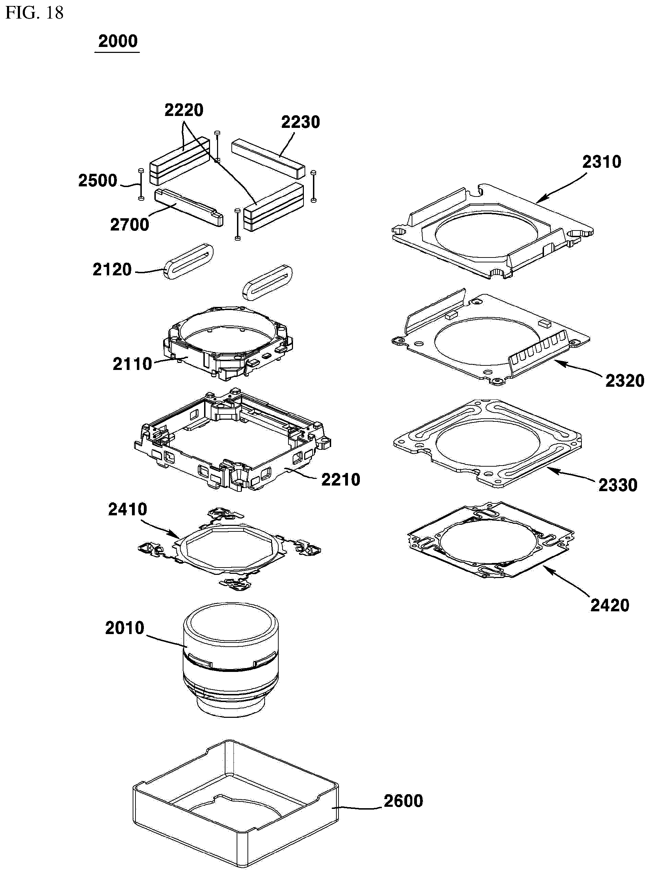

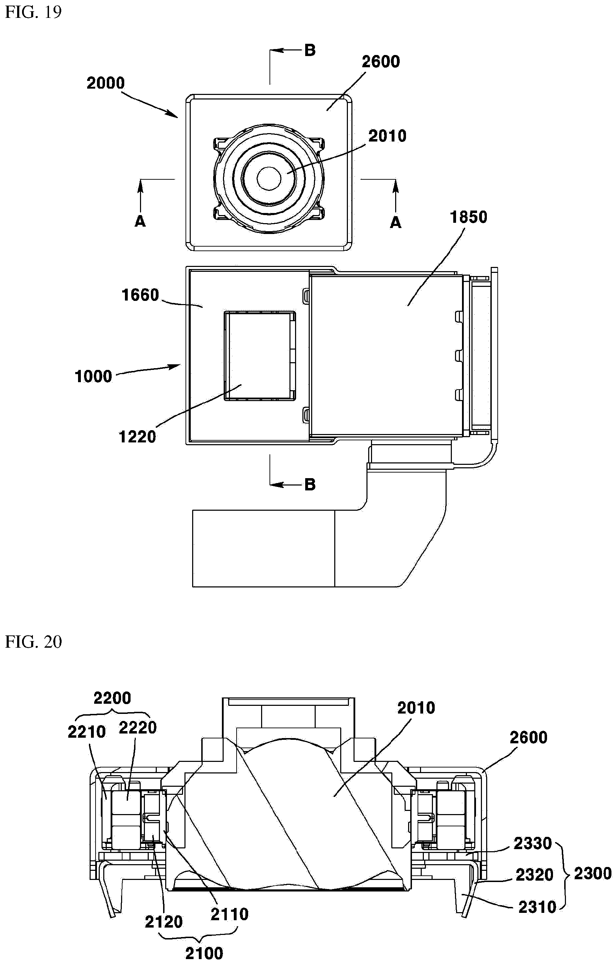

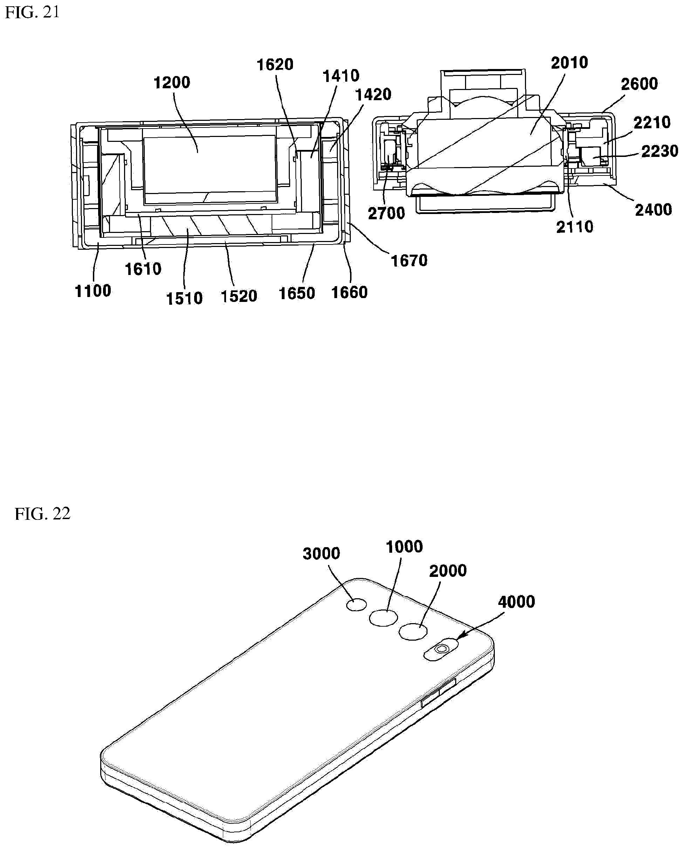

FIG. 16 is a plan view of a state in which a cover member is omitted in a second camera device according to a present embodiment; FIG. 17 is an exploded perspective view of a second camera device according to present embodiment; FIG. 18 is an exploded perspective view of a second camera device viewed from a direction different from that of FIG. 4; FIG. 19 is a plan view of a camera device according to a present embodiment; FIG. 20 is a cross-sectional view viewed from A-A of FIG. 19; and FIG. 21 is a cross-sectional view viewed from line B-B of FIG. 19.

The second camera device **2000** may comprise a lens module. The lens module may comprise at least one lens **2010.** The lens **2010** may be coupled to a lens driving device and face a first axis direction. The lens **2010** may be disposed at a position corresponding to an image sensor. The lens module may comprise a lens **2010** and a barrel. The lens module may be coupled to the bobbin **2110** of the lens driving device. The lens module may be coupled to the bobbin **2110** by screw-coupling and/or adhesive. The lens module may move integrally with the bobbin **2110.**

The second camera device **2000** may comprise a filter. The filter may serve to block light of a specific frequency band from entering the image sensor from light passing through the lens module. The filter may be disposed parallel to an x-y plane. The filter may be disposed between the lens module and the image sensor. The filter may be disposed in the sensor base. In a modified embodiment, a filter may be disposed in the base **2310.** The filter may comprise an infrared filter. The infrared filter may block light in the infrared region from being incident on the image sensor.

The second camera device **2000** may comprise a sensor base. The sensor base may be disposed between the lens driving device and the printed circuit board. The sensor base may comprise a protruded portion in which a filter is disposed. An opening may be formed in a portion of the sensor base where the filter is disposed so that a light passing through the filter may be incident to the image sensor. The adhesive member may couple or attach the base **2310** of the lens driving device to the sensor base. The adhesive member may additionally serve to prevent foreign substances from entering the lens driving device. The adhesive member may comprise any one or more among an epoxy, a thermosetting adhesive, and an ultraviolet curable adhesive.

The second camera device **2000** may comprise a printed circuit board (PCB). A printed circuit board may be a substrate or a circuit board. A lens driving device may be disposed in the printed circuit board. A sensor base may be disposed between the printed circuit board and the lens driving device. The printed circuit board may be electrically connected to the lens driving device. An image sensor may be disposed in the printed circuit board. Various circuits, elements, control units, and the like may be provided in the printed circuit board to convert an image being formed by an image sensor into an electrical signal and transmit the electrical signal to an external device.

The second camera device **2000** may comprise an image sensor. The image sensor may be a configuration on which a light passing through a lens and a filter is incident to form an image. The image sensor may be mounted on a printed circuit board. The image sensor may be electrically connected to the printed circuit board. For example, the image sensor may be coupled to a printed circuit board by surface mounting technology (SMT). As another example, the image sensor may be coupled to a printed circuit board by flip chip technology. The image sensor may be disposed such that an optical axis coincides with a lens. That is, the optical axis of the image sensor and the optical axis of the lens may be aligned. The image sensor may convert light irradiated onto an effective image area of the image sensor into an electrical signal. The image sensor may be any one among a charge coupled device (CCD), a metal oxide semi-conductor (MOS), a CPD, and a CID.

The second camera device **2000** may comprise a motion sensor. The motion sensor may be mounted on a printed circuit board. The motion sensor may be electrically connected to the control unit through a circuit pattern provided on the printed circuit board. The motion sensor may output rotational angular velocity information due to the movement of the second camera device **2000.** The motion sensor may comprise a 2-axis or 3-axis gyro sensor or an angular velocity sensor.

The second camera device **2000** may comprise a control unit. The control unit may be disposed in a printed circuit board. The control unit may be electrically connected to a first coil and a second coil **2120** and **2330** of the lens driving device. The control unit may individually control the direction, intensity, and amplitude of the current being supplied to the first coil and the second coil **2120** and **2330.** The control unit may perform an autofocus function and/or a handshake correction function by controlling the lens driving device. Furthermore, the control unit may perform autofocus feedback control and/or handshake correction feedback control for the lens driving device.

The second camera device **2000** may comprise a connector. The connector may be electrically connected to the printed circuit board. The connector may comprise a port for electrically connecting with an external device.

The second camera device may comprise a lens driving device. The lens driving device may be a voice coil motor (VCM). The lens driving device may be a lens driving motor. The lens driving device may be a lens driving actuator. The lens driving device may comprise an AF module. The lens driving device may comprise an OIS module. The lens driving device may be disposed adjacent to the first magnet **1410** of the first camera device **1000.**

The lens driving device may comprise a first mover **2100.** The first mover **2100** may be coupled with a lens. The first mover **2100** may be connected to the second mover **2200** through an upper elastic member **2410** and/or a lower elastic member **2420.** The first mover **2100** may move through interaction with the second mover **2200.** At this time, the first mover **2100** may move integrally with the lens. Meanwhile, the first mover **2100** may move during AF driving. At this time, the first mover **2100** may be referred to as an 'AF mover'. However, the first mover **2100** may move together with the second mover **2200** even during OIS driving.

The first mover **2100** may comprise a bobbin **2110.** The bobbin **2110** may be disposed inside the housing **2210.** The bobbin **2110** may be disposed in a hole of the housing **2210.** The bobbin **2110** may be movably coupled to the housing **2210.** The bobbin **2110** may move in an optical axis direction against the housing **2210.** A lens may be coupled to the bobbin **2110.** The bobbin **2110** and the lens may be coupled by screw-coupling and/or an adhesive. The first coil **2120** may be coupled to the bobbin **2110.** An upper elastic member **2410** may be coupled to an upper portion or upper surface of the bobbin **2110.** A lower elastic member **2420** may be coupled to a lower portion or a lower surface of the bobbin **2110.** The bobbin **2110** may be coupled to the upper elastic member **2410** and/or the lower elastic member **2420** by thermal fusion and/or an adhesive. An adhesive for coupling the bobbin **2110** and the lens, and the bobbin **2110** and the elastic member **2400** may be an epoxy cured by at least one among ultraviolet (UV) light, heat, and laser.

The first mover **2100** may comprise a first coil **2120.** The first coil **2120** may be an 'AF driving coil' used for AF driving. The first coil **2120** may be disposed in the bobbin **2110.** The first coil **2120** may be disposed between the bobbin **2110** and the housing **2210.** The first coil **2120** may be disposed on an outer lateral surface or an outer peripheral surface of the bobbin **2110.** The first coil **2120** may be directly wound on the bobbin **2110.** Or, the first coil **2120** may be coupled to the bobbin **2110** in a state being directly wound thereon. The first coil **2120** may face the first magnet **2220.** The first coil **2120** may be disposed to face the first magnet **2220.** The first coil **2120** may interact with the first magnet **2220** electromagnetically. In this case, when a current is supplied to the first coil **2120** and an electromagnetic field is formed around the first coil **2120**, the first coil **2120** may move against the first magnet **2220** due to the electromagnetic interaction between the first coil **2120** and the first magnet **2220.** The first coil **2120** may be formed as a single coil. Or, the first coil **2120** may comprise a plurality of coils being spaced apart from each other. The first coil **2120** may be electrically connected to the upper elastic member **2410.** As a modified embodiment, the first coil **2120** may be electrically connected to the lower elastic member **2420.**

The lens driving device may comprise a second mover **2200.** The second mover **2200** may be movably coupled to the stator **2300** through the support member **2500.** The second mover **2200** may support the first mover **2100** through the upper and lower elastic members **2410** and **2420.** The second mover **2200** may move the first mover **2100** or may move together with the first mover **2100.** The second mover **2200** may move through interaction with the stator **2300.** The second mover **2200** may move during OIS driving. At this time, the second mover **2200** may be referred to as 'OIS mover'. The second mover **2200** may move integrally with the first mover **2100** during OIS driving.

The second mover **2200** may comprise a housing **2210.** The housing **2210** may be spaced apart from the base **2310.** The housing **2210** may be disposed outside the bobbin **2110.** The housing **2210** may accommodate at least a portion of the bobbin **2110.** The housing **2210** may be disposed inside the cover member **2600.** The housing **2210** may be disposed between the cover member **2600** and the bobbin **2110.** The housing **2210** may be formed of a material different from that of the cover member **2600.** The housing **2210** may be formed of an insulating material. The housing **2210** may be formed of an injection molding material. An outer side surface of the housing **2210** may be spaced apart from an inner surface of the side plate of the cover member **2600.** Through the separation space between the housing **2210** and the cover member **2600**, the housing **2210** may move for OIS driving.

A first magnet **2220** may be disposed in the housing **2210.** The housing **2210** and the first magnet **2220** may be coupled by an adhesive. A second magnet **2230** may be disposed in the housing **2210.** The housing **2210** and the second magnet **2230** may be coupled by an adhesive. A dummy member **2700** may be disposed in the housing **2210.** The housing **2210** and the dummy member **2700** may be coupled by an adhesive. An upper elastic member **2410** may be coupled to an upper portion or an upper surface of the housing **2210.** A lower elastic member **2420** may be coupled to a lower portion or lower surface of the housing **2210.** The housing **2210** may be coupled to upper and lower elastic members **510** and **520** by thermal fusion and/or an adhesive. The adhesive that couples the housing **2210** and the first magnet **2220** and the housing **2210** and the elastic member **2400** may be an epoxy cured by at least one among ultraviolet (UV), heat, and laser.

The housing **2210** may comprise four side portions and four corner portions being disposed between the four side portions. The side portion of the housing **2210** may comprise a first side portion, a second side portion being disposed at an opposite side of the first side portion, and a third side portion and a fourth side portion being disposed at an opposite side to each other between the first side portion and the second side portion. The corner portion of the housing **2210** may comprise: a first corner portion being disposed between the first side portion and the third side portion; a second corner portion being disposed between the first side portion and the fourth side portion; a third corner portion being disposed between the second side portion and the third side portion; and a fourth corner portion disposed between the second side portion and the fourth side portion. A side portion of the housing **2210** may comprise a 'lateral wall'.

The second mover **2200** may comprise a first magnet **2220.** The first magnet **2220** may be disposed in the housing **2210.** The first magnet **2220** may be fixed to the housing **2210** by an adhesive. The first magnet **2220** may be disposed between the bobbin **2110** and the housing **2210.** The first magnet **2220** may face the first coil **2120.** The first magnet **2220** may interact with the first coil **2120** electromagnetically. The first magnet **2220** may face the second coil **2330.** The first magnet **2220** may interact with the second coil **2330** electromagnetically. The first magnet **2220** may be commonly used for AF driving and OIS driving. The first magnet **2220** may be disposed at a side portion of the housing **2210.** At this time, the first magnet **2220** may be a flat magnet having a flat plate shape. As a modified embodiment, the first magnet **2220** may be disposed at a corner portion of the housing **2210.** At this time, the first magnet **2220** may be a corner magnet having a hexahedral shape with an inner side surface wider than an outer side surface. The first magnet **2220** may comprise a plurality of magnets. The first magnet **2220** may comprise two magnets.

The second mover **2200** may comprise a second magnet **2230.** The second magnet **2230** may be disposed in the housing **2210.** The second magnet **2230** may be fixed to the housing **2210** by an adhesive. The second magnet **2230** may be disposed between the bobbin **2110** and the housing **2210.** The second magnet **2230** may face the second coil **2330.** The second magnet **2230** may interact with the second coil **2330** electromagnetically. The second magnet **2230** may be used for OIS driving. The first magnet **2220** is used to move the second mover **2200** in an OIS-x direction (first axis direction), and the second magnet **2230** may be used to move the second mover **2200** in an OIS-y direction (second axis direction). The second magnet **2230** may be configured with a single magnet. As a modified embodiment, the second magnet **2230** may comprise a plurality of magnets.

The lens driving device may comprise a stator **2300.** The stator **2300** may be disposed below the first and second movers **2100** and **2200.** The stator **2300** may movably support the second mover **2200.** The stator **2300** may move the second mover **2200.** At this time, the first mover **2100** may also move together with the second mover **2200.**

The stator **2300** may comprise a base **2310.** The base **2310** may be disposed below the housing **2210.** The base **2310** may be disposed below a substrate **2320.** The substrate **2320** may be disposed on an upper surface of the base **2310.** The base **2310** may be coupled to the cover member **2600.** The base **2310** may be disposed above the printed circuit board.

The stator **2300** may comprise a substrate **2320.** The substrate **2320** may be disposed between the base **2310** and the housing **2210.** The substrate **2320** may be disposed on an upper surface of the base **2310.** The substrate **2320** may comprise a second coil **2330** facing the first magnet **2220** and the second magnet **2230.** The substrate **2320** may supply power to the second coil **2330.** A support member **2500** may be coupled to the substrate **2320.** The board **2320** may be coupled to the printed circuit board being disposed below the base **2310** by soldering. The substrate **2320** may comprise a flexible printed circuit board (FPCB). The substrate **2320** may be partially bent.

The substrate **2320** may comprise a body unit. A hole may be formed in the body unit. The substrate **2320** may comprise a terminal unit. The terminal unit may be extended downward from the body unit of the substrate **2320.** The terminal unit may be formed as a portion of the substrate **2320** is being bent. At least a portion of the terminal unit may be exposed to the outside. The terminal unit may be coupled to the printed circuit board being disposed below the base **2310** by soldering. The terminal unit may be disposed in the groove of the base **2310.** The terminal unit may comprise a plurality of terminals.

The stator **2300** may comprise a second coil **2330.** The second coil **2330** may be one configuration of the substrate **2320,** but it may be a separate configuration from the substrate **2320.** The second coil **2330** may interact with the first magnet **2220** and the second magnet **2230** electromagnetically. In this case, when a current is supplied to the second coil **2330** and a magnetic field is formed around the second coil **2330**, the first magnet **2220** may move in a first axis direction against the second coil **2330** by the electromagnetic interaction between the second coil **2330** and the first magnet **2220.** When a current is supplied to the second coil **2330** and a magnetic field is formed around the second coil **2330**, the second magnet **2230** may move in a second axis direction against the second coil **2330** by the electromagnetic interaction between the second coil **2330** and the second magnet **2230.** The second coil **2330** may move the housing **2210** and bobbin **2110** in a direction perpendicular to the optical axis against the base **2310** through electromagnetic interaction with the first magnet **2220** and the second magnet **2230.** The second coil **2330** may be a fine pattern coil (FP coil) being integrally formed with the body unit.

The second coil **2330** may comprise a second-first coil that moves the housing **2210** and the bobbin **2110** in a first direction perpendicular to the optical axis direction. The second coil **2330** may comprise a second-second coil that moves the housing **2210** and the bobbin **2110** in an optical axis direction and in a second direction perpendicular to the first direction. At this time, the second-first coil may be formed as a single coil and the second-second coil may be formed as two coils being disposed at an opposite side to each other. Or, conversely, the second-first coil may be formed of two coils being disposed at an opposite side to each other and the second-second coil may be formed of a single coil.

The lens driving device may comprise an elastic member **2400.** At least portion of the elastic member **2400** may have elasticity. The elastic member **2400** may be formed of metal. The elastic member **2400** may be formed of a conductive material. The elastic member **2400** may be coupled to the bobbin **2110** and the housing **2210.** The elastic member **2400** may elastically support the bobbin **2110.** The elastic member **2400** may movably support the bobbin **2110.** The elastic member **2400** may support the movement of the bobbin **2110** during AF driving. That is, the elastic member **2400** may comprise an 'AF support member'. The elastic member **2400** may movably support the housing **2210.** That is, the elastic member **2400** may comprise an 'OIS support member'.

The elastic member **2400** may comprise an upper elastic member **2410.** The upper elastic member **2410** may connect the housing **2210** and the bobbin **2110.** The upper elastic member **2410** may be coupled to an upper portion of the bobbin **2110** and an upper portion of the housing **2210.** The upper elastic member **2410** may be coupled to an upper surface of the bobbin **2110.** The upper elastic member **2410** may be coupled to an upper surface of the housing **2210.** The upper elastic member **2410** may be coupled to the support member **2500.** The upper elastic member **2410** may be formed of a leaf spring.

The upper elastic member **2410** may comprise a plurality of upper elastic units. The upper elastic member **2410** may comprise four upper elastic units. The upper elastic member **2410** may comprise first to fourth upper elastic units. The first to fourth upper elastic units may connect four wires to the four upper terminals **641** of the second substrate **640.** Each of the four upper elastic units may comprise a body unit being coupled to the housing **2210** and a connection terminal being connected to a terminal of the second substrate **640.**

The upper elastic member **2410** may comprise an inner side portion. The inner side portion may be coupled to the bobbin **2110.** The inner side portion may be coupled to an upper surface of the bobbin **2110.** The inner side portion may comprise a hole or groove being coupled to a protruded portion of the bobbin **2110.** The inner side portion may be fixed to the bobbin **2110** by an adhesive.

The upper elastic member **2410** may comprise an outer side portion. The outer side portion may be coupled to the housing **2210.** The outer side portion may be coupled to an upper surface of the housing **2210.** The outer side portion may comprise a hole or groove being coupled to a protrusion of the housing **2210.** The outer side portion may be fixed to the housing **2210** by an adhesive.

The upper elastic member **2410** may comprise a connection portion. The connection portion may connect an inner side portion and an outer side portion. The connection portion may have elasticity. At this time, the connection portion may be referred to as an 'elastic portion'. The connection portion may be formed by bending two or more times.

The upper elastic member **2410** may comprise a coupling portion. The coupling portion may be extended from an outer side portion. The coupling portion may be coupled to the support member **2500.** The coupling portion may comprise a hole through which a wire of the support member **2500** passes. The coupling portion and the wire may be coupled by soldering.

The elastic member **2400** may comprise a lower elastic member **2420.** The lower elastic member **2420** may be disposed below the upper elastic member **2410.** The lower elastic member **2420** may connect the bobbin **2110** and the housing **2210.** The lower elastic member **2420** may be disposed below the bobbin **2110.** The lower elastic member **2420** may be coupled to the bobbin **2110** and the housing **2210.** The lower elastic member **2420** may be coupled to a lower surface of the bobbin **2110.** The lower elastic member **2420** may be coupled to a lower surface of the housing **2210.** The lower elastic member **2420** may be formed of a leaf spring.

The lower elastic member **2420** may comprise an inner side portion. The inner side portion may be coupled to the bobbin **2110.** The inner side portion may be coupled to a lower surface of the bobbin **2110.** The inner side portion may comprise a hole or groove being coupled to a protrusion of the bobbin **2110.** The inner side portion may be fixed to the bobbin **2110** by an adhesive.

The lower elastic member **2420** may comprise an outer side portion. The outer side portion may be coupled to the housing **2210.** The outer side portion may be coupled to a lower surface of the housing **2210.** The outer side portion may comprise a hole or groove coupled to a protrusion of the housing **2210.** The outer side portion may be fixed to the housing **2210** by an adhesive.

The lower elastic member **2420** may comprise a connection portion. The connection portion may connect an inner side portion and an outer side portion. The connection portion may have elasticity. At this time, the connection portion may be referred to as an 'elastic portion'. The connection portion may be formed by being bent two or more times.

The elastic member **2400** may comprise a support member **2500.** The support member **2500** may connect the substrate **2320** and the upper elastic member **2410.** The support member **2500** may be coupled to each of the upper elastic member **2410** and the substrate **2320** by soldering. The support member **2500** may movably support the housing **2210.** The support member **2500** may elastically support the housing **2210.** At least portion of the support member **2500** may have elasticity. The support member **2500** may support the movement of the housing **2210** and the bobbin **2110** during OIS driving. At this time, the support member **2500** may be referred to as an 'OIS support member'. The support member **2500** may comprise an elastic member. The support member **2500** may be formed of a wire. As a modified example, the support member **2500** may be formed of a leaf spring.

The support member **2500** may comprise a wire. The support member **2500** may comprise a wire spring. The support member **2500** may comprise a plurality of wires. The support member **2500** may comprise four wires being connected in pairs to the four upper elastic units. The support member **2500** may comprise first to fourth wires.

The lens driving device may comprise a cover member **2600.** The cover member **2600** may comprise a 'cover can'. The cover member **2600** may be disposed outside the housing **2210.** The cover member **2600** may be coupled to the base **2310.** The cover member **2600** may accommodate the housing **2210** therein. The cover member **2600** may form the outer appearance of the lens driving device. The cover member **2600** may have a hexahedral shape with an open lower surface. The cover member **2600** may be a nonmagnetic material. The cover member **2600** may be formed of a metal material. The cover member **2600** may be formed of a metal plate material. The cover member **2600** may be connected to the ground portion of the printed circuit board. Through this, the cover member **2600** may be grounded. The cover member **2600** may block electromagnetic interference (EMI). At this time, the cover member **2600** may be referred to as an 'EMI shield can'.

The cover member **2600** may comprise an upper plate and a side plate. The cover member **2600** may comprise an upper plate comprising a hole and a side plate being extended downward from an outer periphery or edge of the upper plate. A lower end of the side plate of the cover member **2600** may be disposed on a step portion of the base **2310.** An inner surface of the side plate of the cover member **2600** may be fixed to the base **2310** by an adhesive.

The lens driving device may comprise a dummy member **2600.** The dummy member **2600** may be disposed in the housing **2210.** The dummy member **2600** may not have magnetic force. The magnetic force of the dummy member **2600** may be weaker than that of the second magnet **2230.** The dummy member **2600** may be disposed adjacent to the first camera device **1000.** The dummy member **2600** may have the same weight as the second magnet **2230.** The dummy member **2600** may be disposed to minimize magnetic force interference with the first camera device **1000.** Magnetic force interference between the first camera device **1000** and the second camera device **2000** can be minimized by the dummy member **2600.**

The lens driving device may comprise an OIS sensor. The OIS sensor can be used for OIS feedback control. At this time, the OIS sensor may be referred to as a 'sensor for driving OIS feedback'. The OIS sensor may be disposed between the base **2310** and the substrate **2320.** The OIS sensor may detect the movement of the second mover **2200.** The OIS sensor may comprise a Hall sensor. At this time, the Hall sensor may detect the movement of the housing **2210** by detecting the magnetic force of one or more of the first magnet **2220** and the second magnet **2230.** A detection value detected by the OIS sensor may be used for OIS feedback control.

Hereinafter, an optical instrument according to a present embodiment will be described with reference to drawings.

FIG. 22 is a perspective view of an optical instrument according to a present embodiment.

The optical instrument may comprise any one or more among: a hand phone, a mobile phone, a portable terminal, a mobile terminal, a smart phone, a smart pad, a portable smart device, a digital camera, a laptop computer, a digital broadcasting terminal, a personal digital assistant (PDA), a portable multimedia player (PMP), and navigation. However, an optical instrument may comprise any device for photographing a video or a photo.

The optical instrument may comprise a main body. The optical instrument may comprise camera devices **1000** and **2000.** The camera devices **1000** and **2000** may be disposed in the main body. The camera devices **1000** and **2000** may photograph a subject. An optical instrument may comprise a display. The display can be placed on the main body. The display may output an image photographed by the camera devices **1000** and **2000.** The display may be disposed on a first surface of the main body. The camera devices **1000** and **2000** may be disposed on one or more of a first surface of the main body and a second surface at an opposite side of the first surface.

The optical instrument may comprise camera devices **1000** and **2000** provided on the rear, a subject distance measuring device **3000**, and a flash module **4000.** The subject distance measuring device **3000** may comprise one of the packages of a surface light emitting laser device as a light emitting unit. The subject distance measuring device **3000** may comprise an auto focus function using a laser. The subject distance measuring device **3000** may measure the distance between the subject and the camera devices **1000** and **2000** using a laser. The distance to a subject measured by the subject distance measuring device **3000** may be used for AF driving control of the camera devices **1000** and **2000.** The subject distance measuring device **3000** may be mainly used in a condition in which an auto focus function using images of the camera devices **1000** and **2000** is deteriorated, for example, in close proximity of 10 m or less or in a dark environment. The subject distance measuring device **3000** may comprise a light emitting unit comprising a vertical cavity surface emitting laser (VCSEL) semiconductor device and a light receiving unit such as a photodiode that converts light energy into electrical energy. The subject distance measuring device **3000** may measure the distance to a subject by calculating the time for light emitted from the light emitting unit to be reflected by the subject and incident to the light receiving unit. The flash module **4000** may comprise a light emitting element for emitting a light therein. The flash module **4000** may be operated by operating a camera of an optical instrument or by a user's control.

Although the embodiment of the present invention has been described above with reference to the accompanying drawings, those of ordinary skill in the art to which the present invention belongs will understand that the present invention may be embodied in other specific forms without changing the technical spirit or essential features thereof. Therefore, it should be understood that the embodiments described above are illustrative in all respects and not restrictive.

## Claims

1. A camera device comprising:
a first unit comprising a first housing, a first mover disposed in the first housing and a yoke disposed between the first mover and the first housing; and
a second unit comprising a second housing and a second mover disposed in the second housing,
wherein the first unit is configured to perform an image stabilization function, and the second unit is configured to perform a focusing function,
wherein the first mover comprises a first surface and a second surface disposed in a direction perpendicular to the first surface, and
wherein the yoke of the first unit comprises a first yoke disposed between the first surface of the first mover and the first housing, and a second yoke disposed between the second surface of the first mover and the first housing.

2. The camera device of claim 1, wherein the first yoke and the second yoke are disposed parallel to a direction in which the second mover moves.

3. The camera device of claim 1, comprising:
a first magnet and a first coil configured to tilt the first mover with respect to a first axis; and
a second magnet and a second coil configured to tilt the first mover with respect to a second axis perpendicular to the first axis,
wherein a light is incident along the first axis, and
wherein the first mover, the first yoke, the second magnet, and the second coil are sequentially disposed along the first axis.

4. The camera device of claim 3, wherein the first yoke has an upper surface or a lower surface perpendicular to the first axis.

5. The camera device of claim 3, comprising:
a driving plate disposed between the first housing and the first mover.

6. The camera device of claim 5, wherein the second mover is configured to move along a third axis perpendicular to the first axis and the second axis, and
wherein the driving plate is disposed between the first housing and the first mover in a direction of the third axis.

7. The camera device of claim 6, wherein at least a portion of the first yoke is overlapped with the first magnet in the direction of the third axis.

8. The camera device of claim 3, wherein, in a direction of the second axis, a length of the first yoke is 1.2 to 1.6 times a length of the second magnet.

9. The camera device of claim 3, wherein, in a direction of the second axis, a length of the first yoke is 1.3 to 1.5 times a length of the second magnet.

10. A camera device comprising:
a housing;
a mover disposed in the housing;
a first magnet and coil configured to tilt the mover with respect to a first axis;
a second magnet and a second coil configured to tilt the mover with respect to a second axis perpendicular to the first axis; and
a lens module configured to move along a third axis perpendicular to the first and second axes,
wherein a light is incident along the first axis, and
wherein a first yoke is disposed between the second magnet and the mover.
